# EUROPEAN PATENT APPLICATION

(11) **EP 3 805 696 A1**
(43) Date of publication of application: **14.04.2021**
(21) Application number: 19819176.9
(22) Date of filing: 24.05.2019
(51) Int. Cl.: G01B 11/25

(54) **MEASUREMENT SYSTEM AND MEASUREMENT METHOD**

(30) Priority: 11.06.2018 JP 2018111126
(71) Applicant: OMRON Corporation, Shiokoji-dori, Shimogyo-ku, Kyoto-shi Kyoto 600-8530 (JP)
(72) Inventor: ARIYOSHI, Tomonori, Kyoto 619-0283 (JP); IIDA, Toyoo, Kyoto 619-0283 (JP)
(74) Representative: Becker, Eberhard
(86) International application number: PCT/JP2019/020621
(87) International publication number: WO 2019/239847

(57) **Abstract**

In the present invention, an image processing controller outputs a measurement result indicating the three-dimensional shape of an object using a first image obtained by image capture of an object by an imaging part of a first measurement head in a state in which measurement light from a projection part of the first measurement head is projected to the object, and at least one of a second image obtained by image capture of the object by an imaging part of a second measurement head in a state in which the measurement light from the projection part of the first measurement head is projected to the object, and a third image obtained by image capture of the object by the imaging part of the first measurement head in a state in which measurement light from a projection part of the second measurement head is projected to the object.

## Description

### BACKGROUND OF THE INVENTION

### Technical Field

The present invention relates to a measurement system and a measurement method in which a measurement result is output by irradiating measurement light to an object and imaging the object in a state in which the measurement light is projected.

### Related Art

A technology for measuring a three-dimensional shape of an object using an optical technique is known. As one of techniques for measuring the three-dimensional shape, a method for calculating a distance to each portion using images which are respectively captured from different perspectives is known. Typically, stereo measurement using a stereo camera exists. As a technique for expanding a measurement range in the measurement of the three-dimensional shape using this stereo camera, for example, Japanese Patent Laid-Open No. 2014-215039 (Patent Literature 1) discloses a configuration which is capable of measuring a stereoscopic obstacle over a wide range using a plurality of stereo cameras.

As another technique for measuring the three-dimensional shape of the object, a method also exists in which the three-dimensional shape is acquired based on information obtained by irradiating measurement light to the object and imaging the measurement light which is irradiated to the object. In this measurement method of the three-dimensional shape, a place where the measurement light does not reach or a place where the object cannot be imaged may be generated, that is, a blind spot may be generated. As a technique for preventing the generation of a part which cannot be measured because of this blind spot, for example, Japanese Patent Laid-Open No. 2001-324313 (Patent Literature 2) discloses a three-dimensional shape measurement device which uses a slit light source and a plurality of cameras mounted with a relative positional relationship of fixed positions.

### [Literature of related art]

### [Patent literature]

Patent Literature 1: Japanese Patent Laid-Open No. 2014-215039
Patent Literature 2: Japanese Patent Laid-Open No. 2001-324313

### SUMMARY

### [Problems to be solved]

In order to measure a three-dimensional shape of an object, a measurement device may be used which includes a light source that irradiates measurement light, and an imaging portion including which an irradiation range of the measurement light in a viewing field. When this measurement device is used, a part which cannot be measured (a blind spot) may be generated depending on the shape of the object.

Patent Literature 1 described above assumes the configuration using the stereo camera, and nothing has been discussed with regard to a configuration for irradiating the measurement light to the object. In addition, Patent Literature 2 described above assumes the configuration in which the relative positions of the plurality of cameras relative to one slit light source are fixed, and nothing has been assumed with regard to an integrated measurement device including the light source and the imaging portion.

The present invention aims to provide a configuration using a measurement head to enable expansion of a measurement range and/or improvement of measurement precision, and the measurement head includes a projection portion that irradiates measurement light to an object and an imaging portion that images the object in a state in which the measurement light is projected.

### [Means to Solve the Problems]

A measurement system according to an embodiment of the present invention includes an image processing controller, and a first measurement head and a second measurement head which are connected to the image processing controller. Each of the first measurement head and the second measurement head includes a projection portion which irradiates measurement light to an object, and an imaging portion which images the object in a state in which the measurement light is projected. The image processing controller outputs a measurement result indicating the three-dimensional shape of the object using a first image and at least one of a second image and a third image, wherein the first image is obtained in a way that the imaging portion of the first measurement head images the object in a state in which the measurement light from the projection portion of the first measurement head is projected to the object, the second image is obtained in a way that the imaging portion of the second measurement head images the object in a state in which the measurement light from the projection portion of the first measurement head is projected to the object, and the third image is obtained in a way that the imaging portion of the first measurement head images the object in a state in which the measurement light from the projection portion of the second measurement head is projected to the object.

According to the disclosure, three-dimensional measurement processing is performed using a combination of the first image and the second image and/or the third image which are captured by combining and disposing the measurement heads, and thereby the expansion of the measurement range and/or the improvement of the measurement precision can be achieved.

In the disclosure described above, the image processing controller may extract an image which is not included in the first image from the second image in the images showing the object, and combine the extracted image to the first image.

According to the disclosure, the measurement range can be expanded using the first image and the second image.

In the disclosure described above, the image processing controller may extract an image which is more suitable for measurement in the images showing a common part of the object included in the first image and the third image.

According to the disclosure, the measurement precision can be improved using the first image and the third image.

In the disclosure described above, the image processing controller may output the measurement result indicating the three-dimensional shape of the object further using a fourth image which is obtained in a way that the imaging portion of the second measurement head images the object in a state in which the measurement light from the projection portion of the second measurement head is projected to the object.

According to the disclosure, both the expansion of the measurement range and the improvement of the measurement precision can be achieved.

In the disclosure described above, between the first measurement head and the second measurement head, a communication line may be arranged which is used for notifying the second measurement head of the timing when the measurement light is irradiated from the projection portion of the first measurement head.

According to the disclosure, irradiation timing of the measurement light and image capturing timing by the imaging portion can be more accurately controlled.

In the disclosure described above, a communication line is arranged which is used for notifying, from the image processing controller, the first measurement head and the second measurement head of a timing when the measurement light is irradiated from the projection portion of each measurement head.

According to the disclosure, the irradiation timing of the measurement light and the image capturing timing by the imaging portion can be more accurately controlled.

In the disclosure described above, the projection portions of the first measurement head and the second measurement head may irradiate the measurement light according to structured illumination.

According to the disclosure, light having a predetermined pattern is irradiated, and thus calibration or the like between the respective images which are captured can be facilitated.

In the disclosure described above, a cross section of the measurement light may have a predetermined two-dimensional dark and light pattern.

According to the disclosure, the dark and light pattern is predetermined, and thus the calibration or the like between the respective images which are captured can be facilitated.

In the disclosure described above, the cross section of the measurement light may have the two-dimensional dark and light pattern whose brightness changes in one direction and is the same in the other direction.

According to the disclosure, calculation processing of information in a height direction can be more simplified.

In the disclosure described above, the projection portion may irradiate linear light as the measurement light and change an irradiation position in terms of time.

According to the present invention, the calculation processing of information in the height direction can be more simplified.

A measurement method according to another embodiment of the present invention includes a step in which a first measurement head and a second measurement head are prepared. Each of the first measurement head and the second measurement head includes a projection portion which irradiates measurement light to an object, and an imaging portion which images the object in a state in which the measurement light is projected. The measurement method includes: steps in which the imaging portion of the first measurement head images the object and acquires a first image in a state in which the measurement light from the projection portion of the first measurement head is projected to the object; steps in which the imaging portion of the second measurement head images the object and acquires a second image in a state in which the measurement light from the projection portion of the first measurement head is projected to the object; steps in which the imaging portion of the first measurement head images the object and acquires a third image in a state in which the measurement light from the projection portion of the second measurement head is projected to the object; and a step in which a measurement result indicating the three-dimensional shape of the object is output using the first image and at least one of the second image and the third image.

According to the disclosure, three-dimensional measurement processing is performed using a combination of the first image and the second image and/or the third image which are captured by combining and disposing the measurement heads, and thereby the expansion of the measurement range and/or the improvement of the measurement precision can be achieved.

### [Effect]

According to the present invention, the expansion of the measurement range and/or the improvement of the measurement precision can be achieved.

### BRIEF DESCRIPTION OF THE DRAWINGS

FIG. 1 is a schematic diagram showing an application example of a measurement system according to the embodiment.
FIG. 2 is a schematic diagram showing a configuration example of the measurement system according to the embodiment.
FIG. 3 is a schematic diagram showing a configuration example of a measurement head included in the measurement system according to the embodiment.
FIG. 4 is a schematic diagram showing a configuration example of an image processing controller included in the measurement system according to the embodiment.
FIG. 5 is a diagram showing an example of a dark and light pattern irradiated from the measurement head of the measurement system according to the embodiment.
Parts (A) to (C) of FIG. 6 are diagrams for illustrating a principle of a three-dimensional measurement performed by the measurement system according to the embodiment.
FIG. 7 is a diagram for illustrating related art of the present invention.
FIG. 8 is a diagram for illustrating related art of the present invention.
FIG. 9 is a schematic diagram showing a configuration example of a measurement system according to Embodiment 1.
FIG. 10 is a diagram for illustrating an operation mode of irradiation of measurement light and image capturing of an object in the measurement system according to Embodiment 1.
FIG. 11 is a diagram for illustrating an operation mode of irradiation of the measurement light and image capturing of the object in the measurement system according to Embodiment 1.
FIG. 12 is a diagram for illustrating an operation mode of irradiation of the measurement light and image capturing of the object in the measurement system according to Embodiment 1.
FIG. 13 is a diagram for illustrating an operation mode of irradiation of the measurement light and image capturing of the object in the measurement system according to Embodiment 1.
FIG. 14 is a diagram for illustrating a usage example in which expansion of a measurement range of the measurement system according to Embodiment 1 is achieved.
FIG. 15 is a diagram for illustrating a usage example in which improvement of measurement precision of the measurement system according to Embodiment 1 is achieved.
FIG. 16 is a diagram for illustrating a usage example in which the expansion of the measurement range and the improvement of the measurement precision of the measurement system according to Embodiment 1 are achieved.
FIG. 17 is a schematic diagram showing a connection configuration example between measurement heads in the measurement system according to Embodiment 1.
FIG. 18 is a schematic diagram showing another connection configuration example between the measurement heads in the measurement system according to Embodiment 1.
FIG. 19 is a flow chart showing a measurement processing procedure in the measurement system according to Embodiment 1.
FIG. 20 is a flow chart showing another measurement processing procedure in the measurement system according to Embodiment 1.
FIG. 21 is a diagram for illustrating a phase shifting method used in a measurement system according to Embodiment 2.
FIG. 22 is a diagram for illustrating calibration parameters used in the measurement system according to Embodiment 2.
FIG. 23 is a diagram for illustrating a light cutting method used in a measurement system according to Embodiment 3.
FIG. 24 is a schematic diagram showing another configuration example of the measurement system according to the embodiment.
Parts (A) to (C) of FIG. 25 are schematic diagrams showing a layout example of the measurement head in the measurement system according to the embodiment.

### DESCRIPTION OF THE EMBODIMENTS

Embodiments of the disclosure are described in detail with reference to the drawings. Moreover, the same or equivalent parts in the drawings are marked with the same signs, and descriptions of the same or the equivalent parts are not repeated.

### <A. Application example>

Firstly, an example of a scene in which the present invention is applied is described.

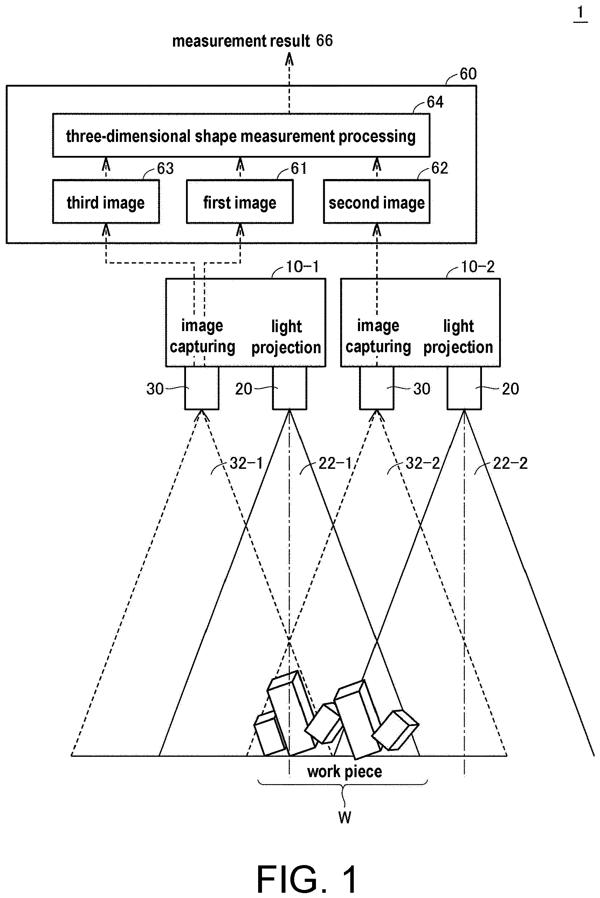

FIG. 1 is a schematic diagram showing an application example of a measurement system 1 according to the embodiment. With reference to FIG. 1, the measurement system 1 has an image processing controller 60 and measurement heads 10-1 and 10-2 which are connected to the image processing controller 60. Each of the measurement heads 10-1 and 10-2 includes a projection portion 20 which irradiates measurement light to an object (a work piece W in the example shown in FIG. 1), and an imaging portion 30 which images the object in a state in which the measurement light is projected.

As shown in FIG. 1, in a typical measurement operation, the imaging portion 30 of the measurement head 10-1 images the object in a state in which measurement light 22-1 from the projection portion 20 of the measurement head 10-1 (equivalent to a first measurement head) is projected to the object (the work piece W), and a first image 61 is acquired. The first image 61 is equivalent to an image formed by incidence of reflection light 32-1 from the work piece W to the imaging portion 30.

Similarly, the imaging portion 30 of the measurement head 10-2 images the object in a state in which the measurement light 22-1 from the projection portion 20 of the measurement head 10-1 (equivalent to the first measurement head) is projected to the object (the work piece W), and a second image 62 is acquired. The second image 62 is equivalent to an image formed by incidence of reflection light 32-2 from the work piece W to the imaging portion 30.

Similarly, the imaging portion 30 of the measurement head 10-1 images the object in a state in which measurement light 22-2 from the projection portion 20 of the measurement head 10-2 (equivalent to a second measurement head) is projected to the object (the work piece W), and a third image 63 is acquired. The third image 63 is equivalent to an image formed by the incidence of the reflection light 32-1 from the work piece W to the imaging portion 30.

The image processing controller 60 outputs a measurement result 66 indicating a three-dimensional shape of the object using the first image 61 and at least one of the second image 62 and the third image 63. More specifically, the image processing controller 60 performs three-dimensional shape measurement processing 64 to the first image 61 and the second image 62 and/or the third image 63, and thereby outputs the three-dimensional shape of the object (typically, a collection of height information in each point of a surface of the object).

More images captured by the imaging portion 30 can be obtained using the configuration, and consequently, expansion of a measurement range and/or improvement of measurement precision can be achieved.

### <B. Device configuration>

Firstly, an example of a device configuration which achieves the measurement system 1 according to the embodiment is described.

### (b1: Configuration example of measurement system 1)

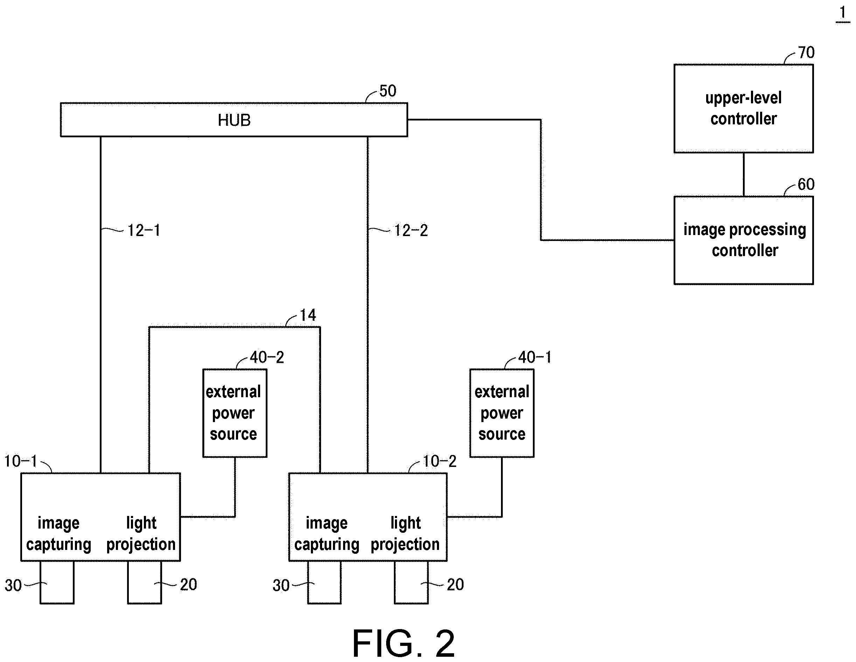

FIG. 2 is a schematic diagram showing a configuration example of the measurement system 1 according to the embodiment. The measurement system 1 according to the embodiment has a plurality of measurement heads (an example of a measurement device) including a projection portion which irradiates the measurement light to the object and an imaging portion which images the object in a state in which the measurement light is projected. In the configuration example shown in FIG. 2, the measurement system 1 according to the embodiment has two measurement heads 10-1 and 10-2 (hereinafter, may also be collectively referred to as "measurement head 10").

Each of the measurement heads 10-1 and 10-2 has the projection portion 20 and the imaging portion 30. A range of irradiation of the measurement light from the projection portion 20 and a range of image capturing by the imaging portion 30 are configured in a way of being substantially consistent with each other. The measurement light which is irradiated from the projection portion 20 may be pattern light having a predetermined dark and light pattern, or may be slit light having a predetermined width.

Electric power is respectively supplied from external power sources 40-1 and 40-2 to the measurement heads 10-1 and 10-2. The measurement heads 10-1 and 10-2 are connected to a hub 50 via communication lines 12-1 and 12-2. Furthermore, the measurement head 10-1 and the measurement head 10-2 are also communicable by a communication line 14.

The measurement system 1 includes the image processing controller 60 which processes the images from the measurement heads 10-1 and 10-2 and outputs a measurement result indicating the three-dimensional shape of the object. An upper-level controller 70 which is an output destination of the measurement result output from the image processing controller 60 may be connected to the image processing controller 60.

With regard to the upper-level controller 70, for example, a programmable controller (PLC) is assumed which controls an equipment, a device or the like related to the object imaged by the measurement heads 10-1 and 10-2. Alternatively, a data base, a production management system, or the like may also be used as the upper-level controller 70.

As described later, in the measurement system 1 according to an embodiment according to the embodiment, the measurement heads 10 are linked with each other, and thereby a configuration is achieved which enables the expansion of the measurement range and/or the improvement of the measurement precision.

### (b2: Configuration example of measurement head 10)

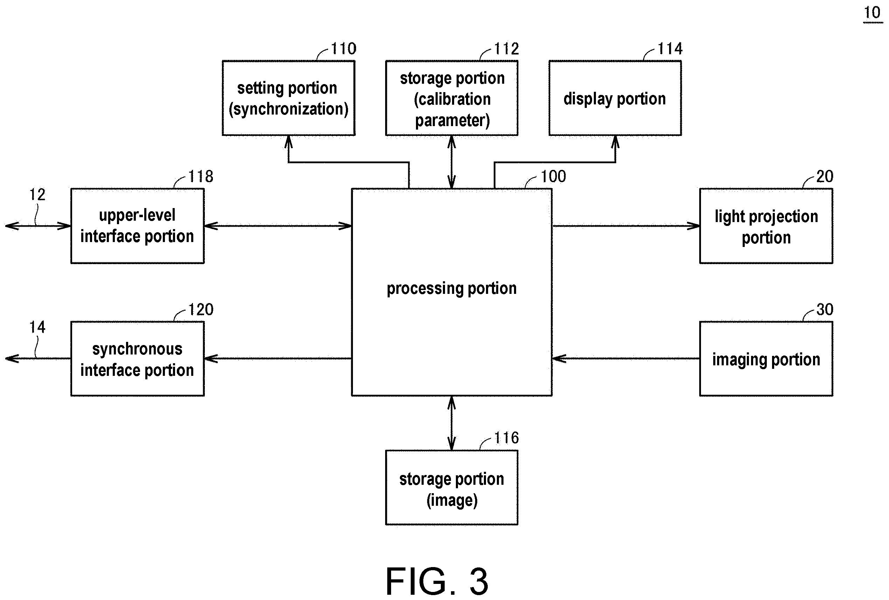

FIG. 3 is a schematic diagram showing a configuration example of the measurement head 10 included in the measurement system 1 according to the embodiment. With reference to FIG. 3, the measurement head 10 includes, in addition to the projection portion 20 and the imaging portion 30, a processing portion 100, a setting portion 110, storage portions 112 and 116, a display portion 114, an upper-level interface (I/F) portion 118, and a synchronous interface (I/F) portion 120.

The processing portion 100 is responsible for the whole processing in the measurement head 10. The processing portion 100 typically includes a processor, a storage which stores an instruction code performed by the processor, and a memory which expands the instruction code. In this case, in the processing portion 100, the processor expands the instruction code on the memory to perform, and thereby various processes are achieved.

Moreover, the whole or a part of the processing portion 100 may be mounted using a dedicated hardware circuit (for example, an Application Specific Integrated Circuit (ASIC), a Field-Programmable Gate Array (FPGA), or the like).

When a plurality of the measurement heads 10 described later is linked to perform an operation, the setting portion 110 receives various settings for achieving synchronization of the measurement heads 10 with each other.

The storage portion 112 stores calibration parameters related to the projection portion 20 and the imaging portion 30 of the measurement head 10 itself including the storage portion 112, and calibration parameters related to a positional relationship between the measurement head 10 and other measurement heads 10. These calibration parameters are acquired by previously calibrating the target measurement heads 10 separately, and calibrating the plurality of measurement heads 10 with each other.

The display portion 114 notifies all kinds of information acquired or calculated in the measurement head 10 to the outside.

The storage portion 116 stores the image acquired by the imaging portion 30. The upper-level interface portion 118 is responsible for a data exchange with an upper-level controller such as the image processing controller 60 (see FIG. 2) or the like. The synchronous interface portion 120 is responsible for a data exchange with other measurement heads 10.

### (b3: Configuration example of image processing controller 60)

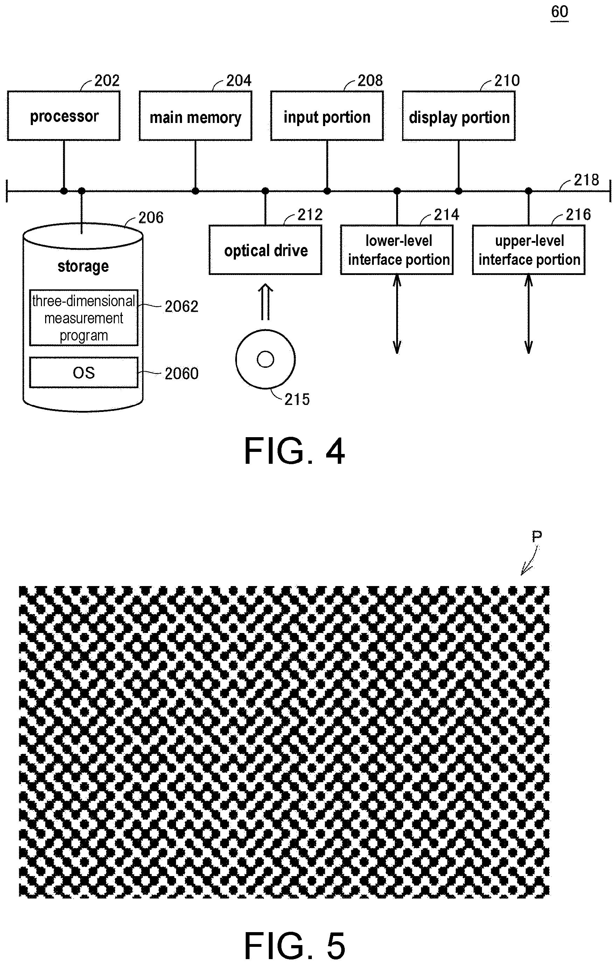

FIG. 4 is a schematic diagram showing a configuration example of the image processing controller 60 included in the measurement system 1 according to the embodiment. Typically, the image processing controller 60 is achieved using a general purpose computer. With reference to FIG. 4, the image processing controller 60 includes a processor 202, a main memory 204, a storage 206, an input portion 208, a display portion 210, an optical drive 212, a lower-level interface portion 214, and an upper-level interface portion 216. These components are connected via a processor bus 218.

The processor 202 is configured by a Central Processing Unit (CPU), a Graphics Processing Unit (GPU), or the like, and the processor 202 reads programs (as an example, an OS 2060 and a three-dimensional measurement program 2062) stored in the storage 206 and expands the programs on the main memory 204 to perform, and thereby various processes described later are achieved.

The main memory 204 is configured by a volatile storage device such as a Dynamic Random Access Memory (DRAM), a Static Random Access Memory (SRAM), or the like. The storage 206 is configured by, for example, a non-volatile storage device such as a Hard Disk Drive (HDD), a Solid State Drive (SSD), or the like.

In the storage 206, in addition to the OS 2060 for achieving a basic function, the three-dimensional measurement program 2062 for providing a function serving as the image processing controller 60 is stored.

The input portion 208 is configured by a keyboard, a mouse, or the like, and receives a user operation. The display portion 210 is configured by a display, various indicators, a printer, or the like, and outputs a processing result or the like from the processor 202.

The lower-level interface portion 214 is responsible for a data exchange with one or more measurement heads 10. The upper-level interface portion 216 is responsible for a data exchange with the upper-level controller 70.

The image processing controller 60 has the optical drive 212, and the program stored in a recording medium 215 is read from the recording medium 215 (for example, an optical recording medium such as a Digital Versatile Disc (DVD) or the like) which non-transitorily stores a program that can be read by a computer, and the program is installed in the storage 206 or the like.

The three-dimensional measurement program 2062 or the like executed by the image processing controller 60 may be installed via the recording medium 215 that can be read by a computer, or may be installed in a way of downloading from a server device on the network piece or the like. In addition, the function provided by the three-dimensional measurement program 2062 according to the embodiment may also be achieved in a way of using a part of a module provided by the OS.

In FIG. 4, a configuration example is shown in which the processor 202 executes the programs and thereby necessary functions serving as the image processing controller 60 are provided, and a part or all of these provided functions may be mounted using the hardware circuit (for example, the ASIC, the FPGA, or the like).

### <C. Three-dimensional measurement>

Next, a three-dimensional measurement performed by the measurement system 1 according to the embodiment is described. In the embodiment, as a typical example, the three-dimensional measurement is achieved using a technique which is referred to as structured illumination. In the technique of the structured illumination, the measurement light is irradiated to the object, and a distance to the object is measured based on the image obtained in a way of imaging the object in the state in which the measurement light is projected. In this case, the projection portion 20 of the measurement head 10 irradiates the measurement light according to the structured illumination.

As an example of the structured illumination, a space code method is known. In the space code method, the measurement light having the predetermined dark and light pattern is irradiated. That is, a cross section of the measurement light has the predetermined two-dimensional dark and light pattern.

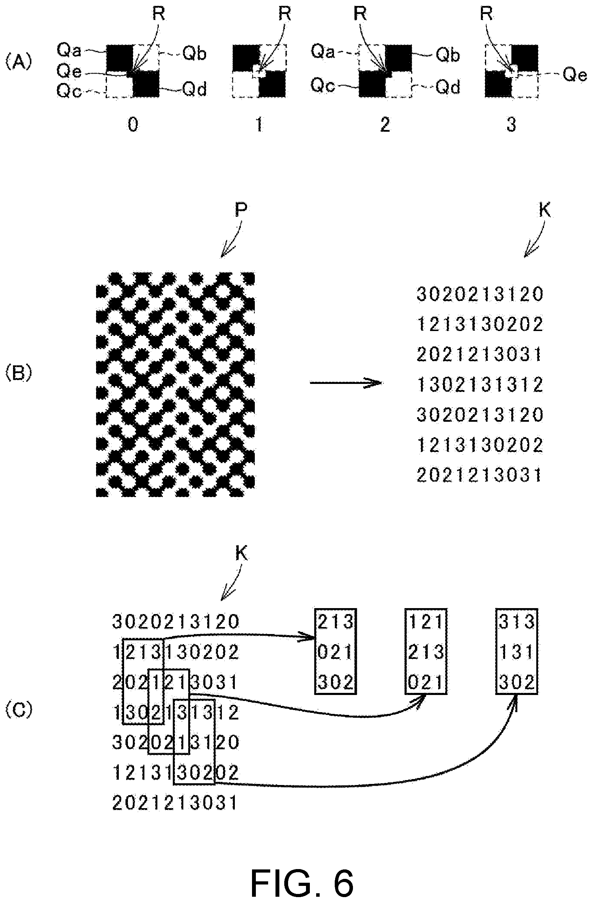

FIG. 5 is a diagram showing an example of the dark and light pattern irradiated from the measurement head 10 of the measurement system 1 according to the embodiment. Parts (A) to (C) of FIG. 6 are diagrams for illustrating a principle of the three-dimensional measurement performed by the measurement system 1 according to the embodiment.

From the projection portion 20 of the measurement head 10, for example, the measurement light including the dark and light pattern P shown in FIG. 5 is irradiated to the object. The imaging portion 30 of the measurement head 10 images the object in a state in which the dark and light pattern P is projected.

The dark and light pattern P shown in FIG. 5 is defined according to a predetermined rule according to the space code method. More specifically, the dark and light pattern P is defined by combinations of multiple types of primitives. In part (A) of FIG. 6, four types of primitives are shown. Each primitive respectively indicates respectively assigned values (in the example shown in part (A) of FIG. 6, four numbers of 1 to 4).

Each primitive is configured by four large squares Qa to Qd, and a small square Qe) located in a central part. Each of the squares Qa to Qd is disposed in a way that a central position R of the primitive is a corner. The central position R is also a central position of the small square Qe.

In part (B) of FIG. 6, a matrix equivalent to a part of the dark and light pattern P (see FIG. 5) is shown. Each primitive included in the projected dark and light pattern P is specified, and each specified primitive is expressed by a number, and thereby a matrix K equivalent to the dark and light pattern P can be generated.

In part (C) of FIG. 6, a partial matrix of the matrix K shown in part (B) of FIG. 6 is shown. A partial matrix having a predetermined size which is set in the matrix K is assumed. This partial matrix is also referred to as "ward". That is, each ward is defined by the combination of a predetermined number of the primitives (3 × 3 in the example shown in part (C) of FIG. 6). The dark and light pattern P is generated in a way that the primitives are arranged so that each of all wards is unique.

All wards included in the matrix K are extracted. In part (C) of FIG. 6, three extracted wards are shown. When all the wards are extracted, with regard to a ward in which sequence of numbers is unique, a position in the dark and light pattern P (a position of the ward) can be specified.

When the dark and light pattern P is irradiated from the measurement head 10 (the projection portion 20), the farther the object is from the projection portion 20, the larger the projection of the dark and light pattern P is. Therefore, a size of the primitive in the image obtained by imaging the object to which the dark and light pattern P is projected also changes depending on a distance between the measurement head 10 and the object.

Based on sizes of the wards defined by the primitives included in the image obtained by imaging the object in a state in which this dark and light pattern P is irradiated to the object and a positional displacement between adjacent wards, a distance from the measurement head 10 to each part of the object and the three-dimensional shape of the object can be measured.

The image processing controller 60 (see FIG. 2) performs, to the image which is output from each measurement head 10, extraction processing of the primitives and evaluation processing of the positions and the sizes of the wards specified by the extracted primitives, and thereby outputs the measurement result of the three-dimensional shape of the object.

As described later, as another example of the structured illumination, for example, a phase shifting method, a light cutting method, or the like can also be used.

A technical idea of the present invention is applicable regardless of which measurement method described above is used.

### <D. Related art and problems>

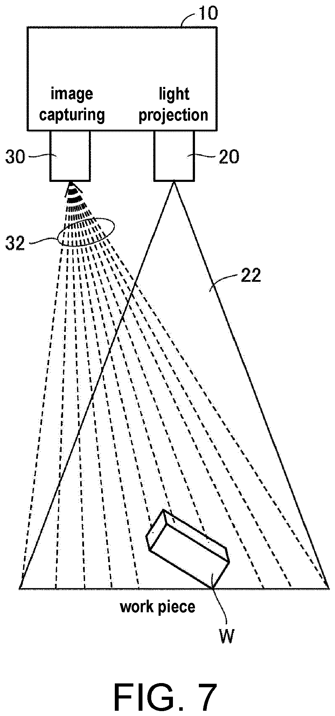

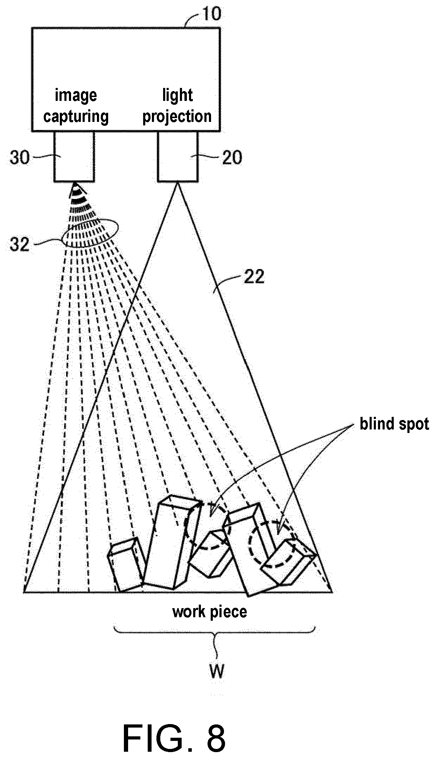

Next, related art and problems of the present invention is described in brief. FIG. 7 and FIG. 8 are diagrams for illustrating the related art of the present invention.

Firstly, as shown in FIG. 7, it is assumed that a measurement head 10 is used to three-dimensionally measure a single work piece W disposed in a viewing field of the measurement head 10. With reference to FIG. 7, measurement light 22 is irradiated from the projection portion 20 of the measurement head 10 toward the work piece W. In a state in which the measurement light 22 is irradiated to the work piece W, reflection light 32 in the viewing field of the imaging portion 30 is acquired, and thereby the image in the viewing field of the imaging portion 30 is acquired.

In an example shown in FIG. 7, an optical path of the reflection light 32 generated by a reflection of the measurement light 22 by a surface of the work piece W is different from an optical path of the reflection light 32 generated by a reflection of the measurement light 22 by other parts (a reference surface on which the work piece W is disposed). Based on a characteristic in the image generated by this difference between the optical paths, a height of each part of the surface of the work piece W can be calculated.

Next, as shown in FIG. 8, it is assumed that a measurement head 10 is used to three-dimensionally measure a plurality of work pieces W which is randomly stacked in a viewing field of the measurement head 10. With reference to FIG. 8, the measurement light 22 is irradiated from the projection portion 20 of the measurement head 10 toward the plurality of work pieces W. At this time, depending on the state in which the work pieces W are stacked, a part which is not included in the viewing field of the imaging portion 30 (that is, a blind spot) may be generated.

In this way, in a configuration consisting of a single measurement head 10 only, the blind spot may be generated, and a part to which the three-dimensional measurement cannot be performed may be generated in an arrangement state in which the plurality of work pieces W is randomly stacked.

In view of the problems described above, in the measurement system 1 according to the embodiment, the plurality of measurement heads 10 is used to perform the three-dimensional measurement of the object. The improvement of the measurement precision and/or the expansion of the measurement range can be achieved using the plurality of measurement heads 10.

### <E. Embodiment 1>

### (e1: Arrangement example of measurement head)

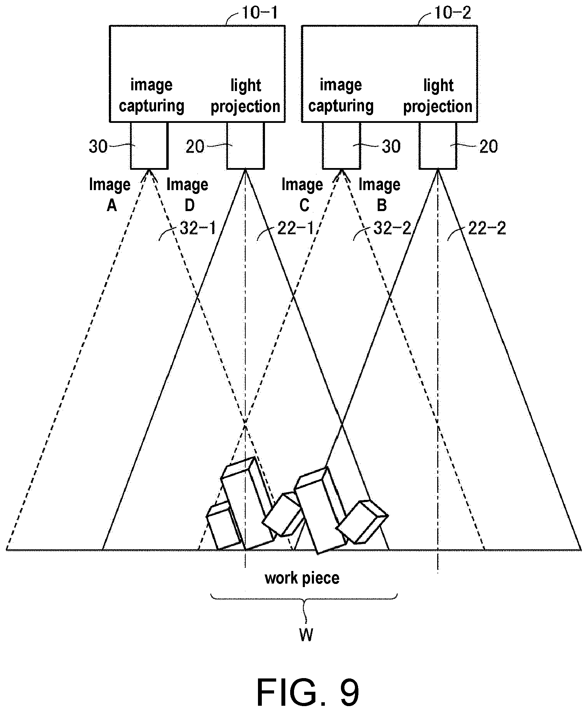

FIG. 9 is a schematic diagram showing a configuration example of the measurement system 1 according to Embodiment 1. With reference to FIG. 9, the projection portion 20 of the measurement head 10-1 irradiates the measurement light 22-1 in a way of including not only the viewing field of the imaging portion 30 of the measurement head 10-1 but also (a part of) the viewing field of the imaging portion 30 of the measurement head 10-2. Similarly, the projection portion 20 of the measurement head 10-2 irradiates the measurement light 22-2 in a way of including not only the viewing field of the imaging portion 30 of the measurement head 10-2 but also (a part of) the viewing field of the imaging portion 30 of the measurement head 10-1.

As shown in FIG. 9, the plurality of measurement heads 10 is arranged in a way of being capable of imaging the measurement light 22 irradiated from a projection portion 20 of one measurement head 10 by an imaging portion 30 of the other measurement head 10. In the configuration example shown in FIG. 9, four combinations exist, which are combined by the projection portion 20 which irradiates the measurement light and the imaging portion 30 which performs the image capturing in a state in which the measurement light is projected.

### (e2: Operation mode)

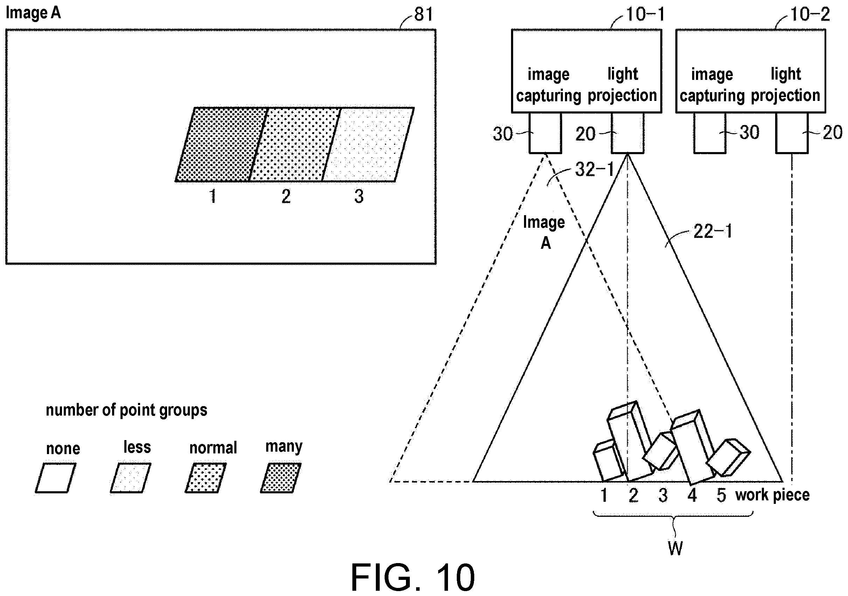

FIGS. 10 to 13 are diagrams for illustrating operation modes of the irradiation of the measurement light and the image capturing of the object in the measurement system 1 according to Embodiment 1. In FIGS. 10 to 13, as an example, an example is shown in which five work pieces W are arranged in a way of partially overlapping with each other. For convenience of description, the five work pieces W are marked with numbers of 1 to 5, and these numbers are corresponding to numbers given in the image captured by the imaging portion 30.

"Point groups" shown in FIGS. 10 to 13 schematically show the number of the primitives appearing because of the measurement light 22 (the dark and light pattern) irradiated from the projection portion 20 of the measurement head 10. The closer to the projection portion 20 of the measurement head 10, the more the point groups appear. The number of the point groups indicates the measurement precision, and higher measurement precision can be achieved when more point groups appear.

In FIG. 10, an operation mode is shown in which the projection portion 20 of the measurement head 10-1 irradiates the measurement light 22-1 including the dark and light pattern to the work piece W, and the imaging portion 30 of the measurement head 10-1 images the reflection light 32-1 from the work piece W. In the operation mode shown in FIG. 10, an image output from the imaging portion 30 of the measurement head 10-1 is referred to as "image A".

In the viewing field of the imaging portion 30 of the measurement head 10-1, the work pieces W 1 to 3 exist, and images of the work pieces W 1 to 3 are included as the object in the image A (see a sign 81).

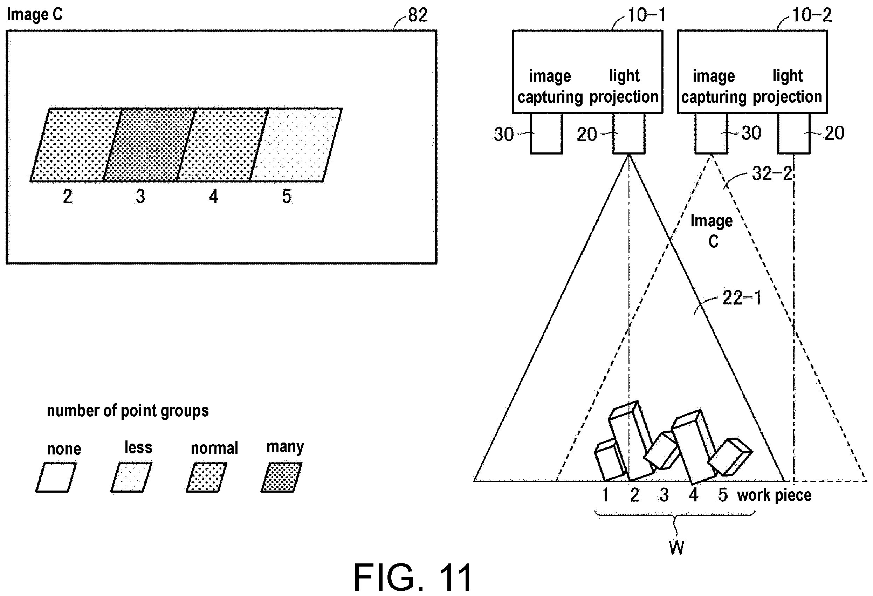

In FIG. 11, an operation mode is shown in which the projection portion 20 of the measurement head 10-1 irradiates the measurement light 22-1 including the dark and light pattern to the work piece W, and the imaging portion 30 of the measurement head 10-2 images the reflection light 32-2 from the work piece W. In the operation mode shown in FIG. 11, an image output from the imaging portion 30 of the measurement head 10-2 is referred to as "image C".

In the viewing field of the imaging portion 30 of the measurement head 10-2, the work pieces W 1 to 5 exist, but the work piece W 1 is a blind spot of the work piece W 2, and thus images of the work pieces W 2 to 5 are included as the object in the image C (see a sign 82).

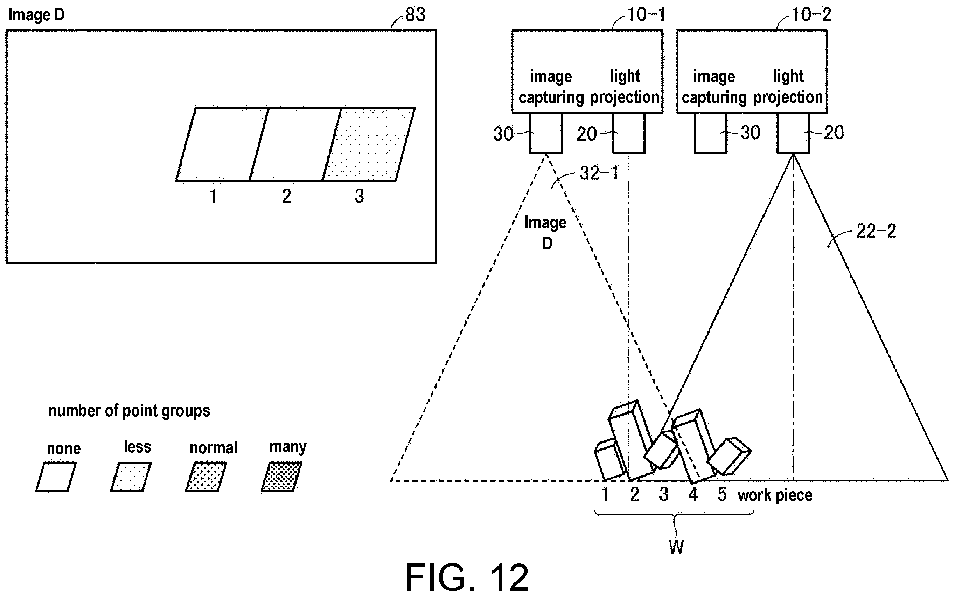

In FIG. 12, an operation mode is shown in which the projection portion 20 of the measurement head 10-2 irradiates the measurement light 22-2 including the dark and light pattern to the work piece W, and the imaging portion 30 of the measurement head 10-1 images the reflection light 32-1 from the work piece W. In the operation mode shown in FIG. 12, an image output from the imaging portion 30 of the measurement head 10-1 is referred to as "image D".

In the viewing field of the imaging portion 30 of the measurement head 10-1, the work pieces W 1 to 3 exist, and images of the work pieces W 1 to 3 are included as the object in the image D (see a sign 83). However, the measurement light 22-2 from the measurement head 10-2 is not irradiated to the work pieces W 1 and 2, and thus the work pieces W 1 and 2 are imaged in a state in which the dark and light pattern is not projected.

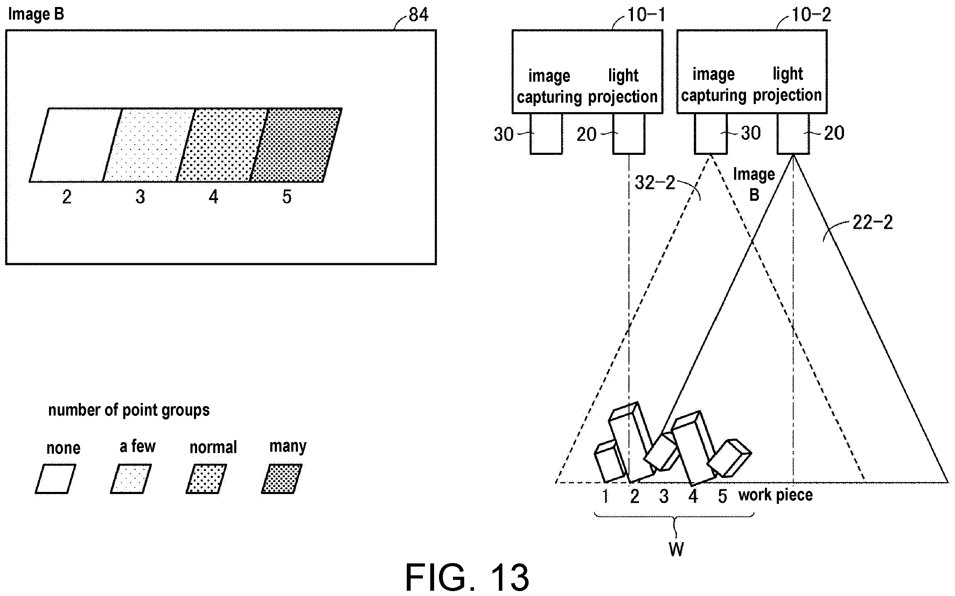

In FIG. 13, an operation mode is shown in which the projection portion 20 of the measurement head 10-2 irradiates the measurement light 22-2 including the dark and light pattern to the work piece W, and the imaging portion 30 of the measurement head 10-2 images the reflection light 32-2 from the work piece W. In the operation mode shown in FIG. 13, an image output from the imaging portion 30 of the measurement head 10-2 is referred to as "image B".

In the viewing field of the imaging portion 30 of the measurement head 10-2, the work pieces W 1 to 5 exist, but the work piece W 1 is a blind spot of the work piece W 2, and thus images of the work pieces W 2 to 5 are included as the object in the image B (see a sign 84).

### (e3: Usage example of image)

Next, usage examples of the images A to D captured by the configuration examples as shown in FIGS. 10 to 13 are described.

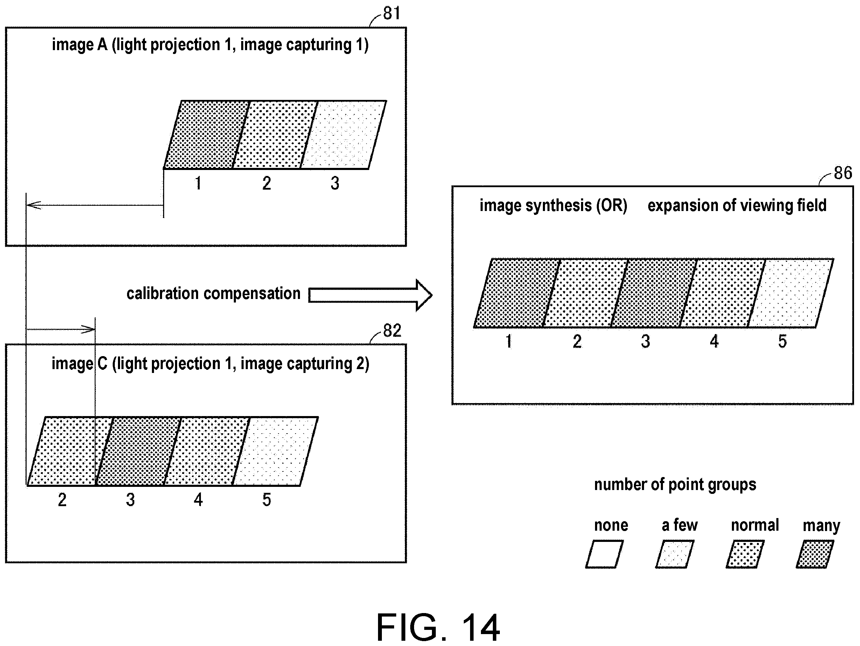

FIG. 14 is a diagram for illustrating a usage example in which the expansion of the measurement range of the measurement system 1 according to Embodiment 1 is achieved. In FIG. 14, a processing example is shown which uses the image A (see FIG. 10) which is captured by the imaging portion 30 of the measurement head 10-1 in a state in which the measurement light 22-1 is irradiated from the projection portion 20 of the measurement head 10-1, and the image C (see FIG. 11) which is captured by the imaging portion 30 of the measurement head 10-2 in a state in which the measurement light 22-1 is irradiated from the projection portion 20 of the measurement head 10-1.

The measurement head 10-1 and the measurement head 10-2 are previously calibrated. The calibration is processing in which a difference between ranges of irradiation and image capturing of the measurement head 10-1 and ranges of irradiation and image capturing of the measurement head 10-2 is previously calculated. Calibration parameters determined by the calibration include an offset for synthesizing the measurement result obtained by the measurement head 10-1 and the measurement result obtained by the measurement head 10-2.

With reference to the calibration parameters, information related to a part which is a blind spot when observed from one measurement head 10 can be acquired by image synthesis of the image A captured by the imaging portion 30 of the measurement head 10-1 and the image C captured by the imaging portion 30 of the measurement head 10-2.

In an example shown in FIG. 14, the image A only includes the images of the work pieces W 1 to 3, the image C only includes the images of the work pieces W 2 to 5, and the three-dimensional measurements of all the work pieces W cannot be achieved only by a single image. On the other hand, all the images of the work pieces W can be included in one image by image synthesis of the image A and the image C. The image synthesis processing shown in FIG. 14 is processing in which the images captured by the imaging portion 30 are directly combined. With regard to overlap parts, summation processing may be performed on corresponding pixel values of the two images with each other, or selection processing may be performed on pixel values of either one of the images.

In the usage example shown in FIG. 14, the image processing controller 60 extracts an image which is not included in the image A from the image C in the images showing the work piece W (object), and combines the extracted image to the image A, and thereby a viewing field range of the imaging portion 30 is substantially expanded.

Moreover, in an implementation example of the processing, the extraction processing of the primitives and the wards shown in parts (A) to (C) of FIG. 6 may be performed on a synthesized image 86 obtained by synthesizing the image A and the image C, and thereby the measurement result related to all the work pieces W may be output. Alternatively, the extraction processing of the primitives and the wards shown in parts (A) to (C) of FIG. 6 may be respectively performed on the image A and the image C, and thereby the measurement result corresponding to respective images may be output and respective measurement results may be synthesized.

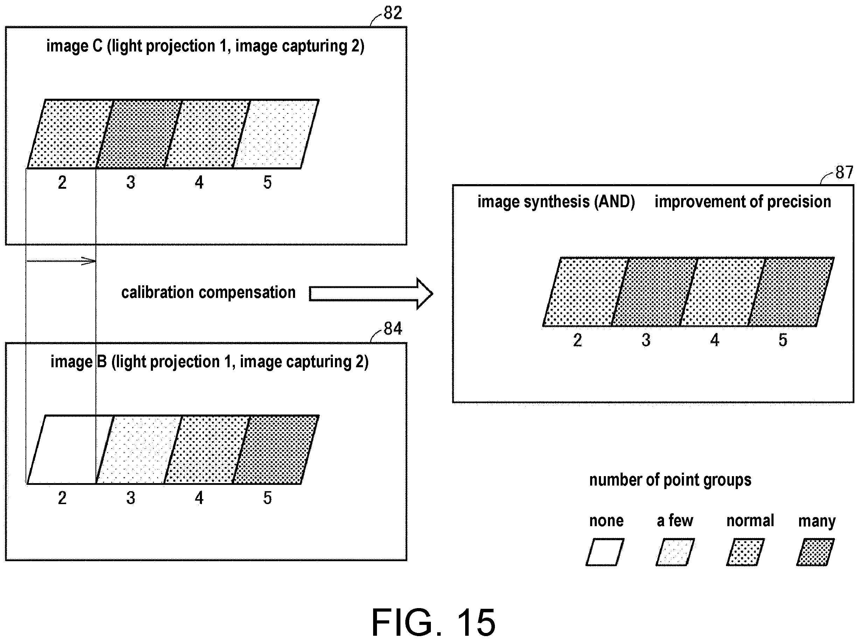

FIG. 15 is a diagram for illustrating a usage example in which the improvement of the measurement precision of the measurement system 1 according to Embodiment 1 is achieved. In FIG. 15, a processing example is shown which uses the image C (see FIG. 11) which is captured by the imaging portion 30 of the measurement head 10-2 in a state in which the measurement light 22-1 is irradiated from the projection portion 20 of the measurement head 10-1, and the image B (see FIG. 13) which is captured by the imaging portion 30 of the measurement head 10-2 in a state in which the measurement light 22-2 is irradiated from the projection portion 20 of the measurement head 10-2.

With reference to the calibration parameters, precision of the three-dimensional measurement of the object by the same measurement head 10 can be improved by image synthesis of the image B and the image C which are captured by the imaging portion 30 of the measurement head 10-2.

In an example shown in FIG. 15, the image C only includes the images of the work pieces W 2 to 5, and the image B only includes the images of the work pieces W 2 to 5. In the image C, a sufficient dark and light pattern is projected to the work pieces W 2 to 4, but projection quantity of the dark and light pattern projected to the work piece W 5 is relatively small. On the other hand, in the image B, a sufficient dark and light pattern is projected to the work pieces W 4 and 5, but projection quantity of the dark and light pattern projected to the work piece W 3 is relatively small. Furthermore, the dark and light pattern is not projected to the work piece W 2. Therefore, a distance to the work piece W 5 or the three-dimensional shape cannot be accurately acquired only by the image C. On the other hand, a distance to the work piece W 2 or the three-dimensional shape cannot be acquired only by the image B.

Therefore, a distance or the three-dimensional shape related to all of the work pieces W 2 to 5 can be accurately measured by the image synthesis of the image C and the image B. More specifically, for each work piece W which is an object to be measured or for each predetermined section, corresponding partial images are extracted from either of the image C and the image B, and the extracted partial images are combined, and thereby a synthesized image 87 is generated. That is, in the image synthesis processing shown in FIG. 15, generally, with regard to overlap parts, the selection processing is performed on pixel values of either one of the images.

In the example shown in FIG. 15, images of the work pieces W 2 and 3 are extracted from the image C, and images of the work pieces W 4 and 5 are extracted from the image B. Images of each work piece W are combined, and thereby the synthesized image 87 is generated, and the three-dimensional measurement is performed using the synthesized image 87.

Moreover, in an implementation example of the processing, the extraction processing of the primitives and the wards shown in parts (A) to (C) of FIG. 6 may be performed on the synthesized image 87 obtained by synthesizing the image C and the image B, and thereby the measurement result related to all the work pieces W included in the viewing field may be output. Alternatively, the extraction processing of the primitives and the wards shown in parts (A) to (C) of FIG. 6 may be respectively performed on the image C and the image B, and thereby the measurement result corresponding to respective images may be output and respective measurement results may be synthesized.

In a usage example shown in FIG. 15, the image processing controller 60 may extract an image which is more suitable for measurement in the images showing a common part of the work piece W (object) included in the image C and the image B, and thereby the precision of the measurement by the imaging portion 30 is improved.

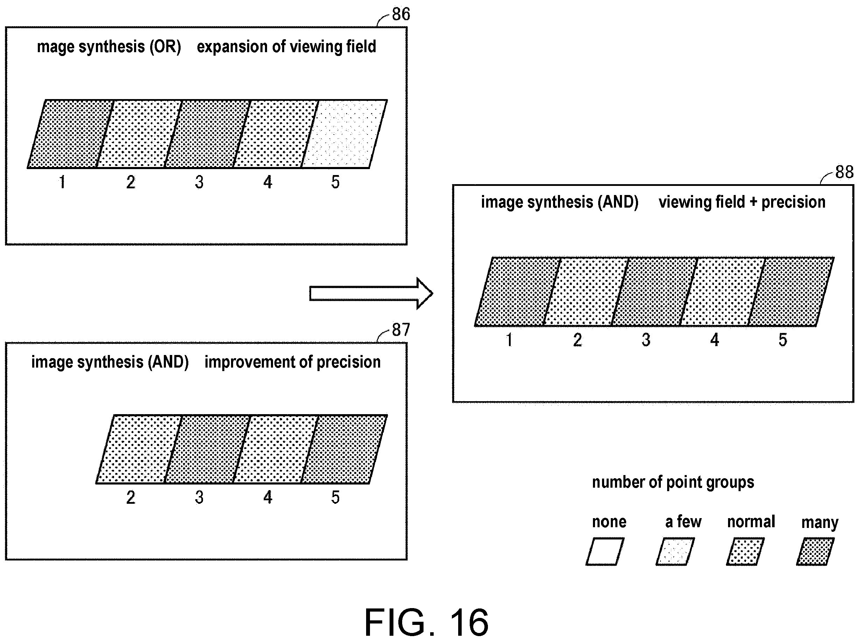

FIG. 16 is a diagram for illustrating a usage example in which the expansion of the measurement range and the improvement of the measurement precision of the measurement system 1 according to Embodiment 1 are achieved. In FIG. 16, a processing example is shown which uses the synthesized image 86 generated by the synthesize processing shown in FIG. 14 and the synthesized image 87 generated by the synthesize processing shown in FIG. 15.

In an example shown in FIG. 16, the synthesized image 86 includes images of the work pieces W 1 to 5, and the synthesized image 87 includes the images of the work pieces W 2 to 5. However, in the synthesized image 86, the sufficient dark and light pattern is projected to the work pieces W 1 to 4, but the projection quantity of the dark and light pattern projected to the work piece W 5 is relatively small. On the other hand, in the synthesized image 87, the sufficient dark and light pattern is projected to the work pieces W 2 to 5.

That is, the synthesized image 86 has a sufficient viewing field range, but includes an area in which measurement precision is low, and the synthesized image 87 has sufficient measurement precision, but has no sufficient measurement range.

Therefore, the expansion of the measurement range and the improvement of the measurement precision are achieved by image synthesis of the synthesized image 86 and the synthesized image 87. More specifically, for each work piece W which is an object to be measured or for each predetermined section, corresponding partial images are extracted from either of the synthesized images, and the extracted partial images are combined, and thereby a synthesized image 88 is generated.

In the example shown in FIG. 16, an image of the work piece W 1 is extracted from the synthesized image 86, an image of the work piece W 5 is extracted from the synthesized image 87. Images of the work pieces W 2 to 4 are extracted from either of the synthesized image 86 and the synthesized image 87. Images of each work piece W are extracted, and thereby the synthesized image 88 is generated, and the three-dimensional measurement is performed using the synthesized image 88.

Moreover, in an implementation example of the processing, the extraction processing of the primitives and the wards shown in parts (A) to (C) of FIG. 6 may be performed on a synthesized image 44 obtained by synthesizing the synthesized image 86 and the synthesized image 87, and thereby the measurement result related to all the work pieces W included in the viewing field may be output. Alternatively, the extraction processing of the primitives and the wards shown in parts (A) to (C) of FIG. 6 may be respectively performed on the synthesized image 86 and the synthesized image 87, and thereby the measurement result corresponding to respective images may be output and respective measurement results may be synthesized.

In a usage example shown in FIG. 16, the image processing controller 60 outputs the measurement result indicating the three-dimensional shape of the work piece W by using the image A which is obtained in a way that the imaging portion 30 of the measurement head 10-1 images the work piece W in a state in which the measurement light from the projection portion 20 of the measurement head 10-1 is projected to the work piece W, the image C which is obtained in a way that the imaging portion 30 of the measurement head 10-2 images the work piece W in a state in which the measurement light from the projection portion 20 of the measurement head 10-1 is projected to the work piece W, and the image B which is obtained in a way that the imaging portion 30 of the measurement head 10-2 images the work piece W in a state in which the measurement light from the projection portion 20 of the measurement head 10-2 is projected to the work piece W. The viewing field range of the imaging portion 30 can be substantially expanded and the measurement precision of the imaging portion 30 can be improved using this processing.

### (e4: Connection configuration between measurement heads)

Next, an example is described in which a connection configuration for linking the plurality of measurement heads 10 to perform an operation in the measurement system 1 according to Embodiment 1.

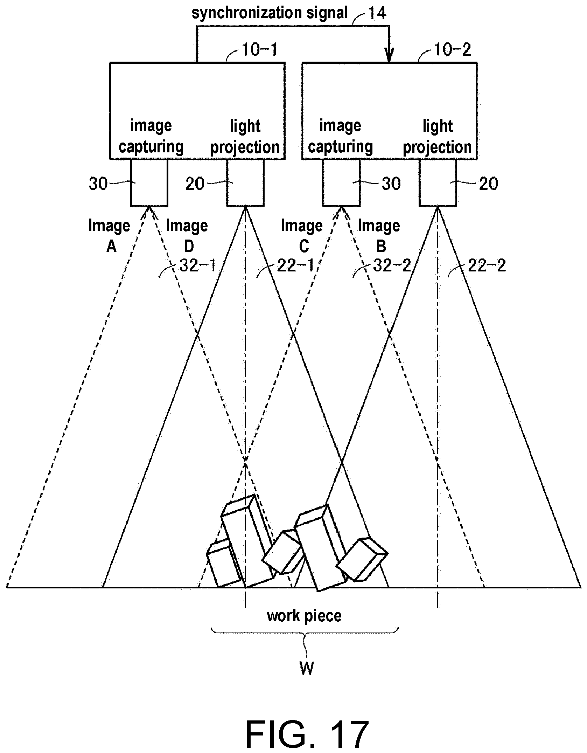

FIG. 17 is a schematic diagram showing a connection configuration example between the measurement heads 10 in the measurement system 1 according to Embodiment 1. With reference to FIG. 17, for example, the measurement head 10-1 and the measurement head 10-2 are connected via the communication line 14. The measurement head 10-1 and the measurement head 10-2 synchronously perform the irradiation of the measurement light and the image capturing by exchanging a synchronization signal via the communication line 14.

For example, the synchronization signal is output to the measurement head 10-2 to match the timing when the projection portion 20 of the measurement head 10-1 irradiates the measurement light 22, and thereby the imaging portion 30 of the measurement head 10-1 and the imaging portion 30 of the measurement head 10-2 can simultaneously or sequentially perform the image capturing. Similarly, the synchronization signal is output to the measurement head 10-1 to match the timing when the projection portion 20 of the measurement head 10-2 irradiates the measurement light 22, and thereby the imaging portion 30 of the measurement head 10-1 and the imaging portion 30 of the measurement head 10-2 can simultaneously or sequentially perform the image capturing.

In this way, the communication line 14, which is used for notifying the measurement head 10-2 of the timing when the measurement light is irradiated from the projection portion 20 of the measurement head 10-1, may be arranged between the measurement head 10-1 and the measurement head 10-2.

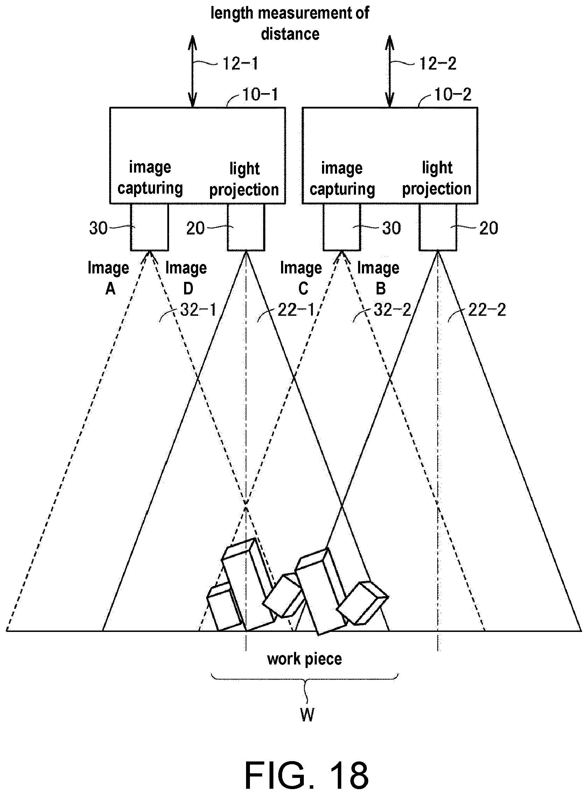

FIG. 18 is a schematic diagram showing another connection configuration example between the measurement heads 10 in the measurement system 1 according to Embodiment 1. In FIG. 18, a connection configuration example is shown in which the plurality of measurement heads 10 is used as necessary. For example, depending on the arrangement state of the work piece W, sufficient three-dimensional measurement can also be achieved using a single measurement head 10. In this case, the plurality of measurement heads 10 is not necessary to be used.

When this processing is used, for example, based on the measurement result obtained by sending of the image captured by the measurement head 10-1 to the image processing controller 60 (see FIG. 2) and the image processing performed by the image processing controller 60, an additional image capturing command may be given to the measurement head 10-2 as necessary.

The connection configuration example is used, and thereby the three-dimensional measurement can be achieved by appropriately using either or both of the measurement head 10-1 and the measurement head 10-2 as necessary.

### (e5: Measurement processing procedure (number 1))

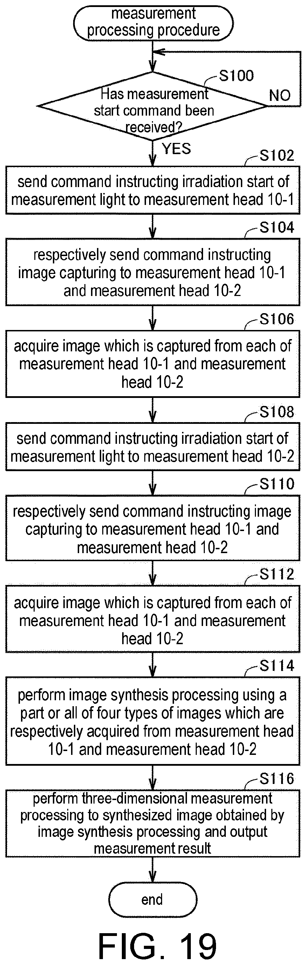

Next, a measurement processing procedure in the measurement system 1 according to Embodiment 1 is described. FIG. 19 is a flow chart showing the measurement processing procedure in the measurement system 1 according to Embodiment 1. Typically, each step shown in FIG. 19 is achieved by execution of the three-dimensional measurement program 2062 (see FIG. 2) by the processor 202 of the image processing controller 60.

In FIG. 19, an example is shown in which the measurement head 10-1 and the measurement head 10-2 respectively irradiate the measurement light 22, and the measurement head 10-1 and the measurement head 10-2 respectively perform the image capturing for each irradiation of the measurement light 22. Before the measurement processing shown in FIG. 19 stars, the measurement head 10-1 and the measurement head 10-2 are prepared.

With reference to FIG. 19, if the image processing controller 60 receives a measurement start command (YES in step S100), the image processing controller 60 sends a command instructing irradiation start of the measurement light to the measurement head 10-1 (step S102), and sends a command instructing the image capturing to the measurement head 10-1 and the measurement head 10-2 respectively (step S104). The image processing controller 60 acquires the images (the image A and the image C) which are captured from each of the measurement head 10-1 and the measurement head 10-2 (step S106).

That is, processing is performed in which the first image is acquired in a way that the imaging portion 30 of the measurement head 10-2 images the work piece W in a state in which the measurement light from the projection portion 20 of the measurement head 10-1 is projected to the work piece W. In the meantime, processing is performed in which the second image is acquired in a way that the imaging portion 30 of the measurement head 10-2 images the work piece W in a state in which the measurement light from the projection portion 20 of the measurement head 10-1 is projected to the work piece W.

Then, the image processing controller 60 sends a command instructing the irradiation start of the measurement light to the measurement head 10-2 (step S108), and sends a command instructing the image capturing to the measurement head 10-1 and the measurement head 10-2 respectively (step S110). The image processing controller 60 acquires the images which are captured from each of the measurement head 10-1 and the measurement head 10-2 (step S112).

That is, processing is performed, in which the third image is acquired in a way that the imaging portion 30 of the measurement head 10-2 images the work piece W in a state in which the measurement light from the projection portion 20 of the measurement head 10-2 is projected to the work piece W. In the meantime, processing is performed in which a fourth image is acquired in a way that the imaging portion 30 of the measurement head 10-1 images the work piece W in a state in which the measurement light from the projection portion 20 of the measurement head 10-2 is projected to the work piece W.

According to the processing described above, the irradiation of the measurement light and the image capturing in a state in which the measurement light is projected that are performed by the measurement head 10 are completed.

Then, the image processing controller 60 performs image synthesis processing using a part or all of the four types of images which are respectively acquired from the measurement head 10-1 and the measurement head 10-2 (step S114). That is, processing is performed in which the measurement result indicating the three-dimensional shape of the work piece W is output. Contents of the image synthesis processing in step S114 are determined according to a previously set purpose or the like. Then, the image processing controller 60 performs the three-dimensional measurement processing on the synthesized image obtained by the image synthesis processing and outputs the measurement result (step S116). Accordingly, the processing ends and comes into a state of waiting for an input of the next measurement start command.

### (e6: Measurement processing procedure (number 2))

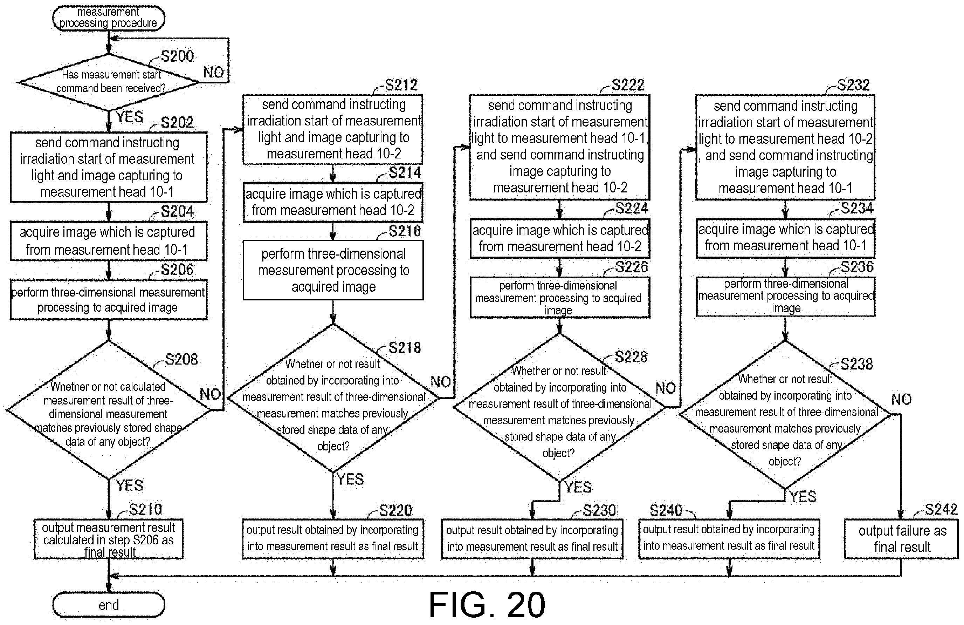

Next, another measurement processing procedure in the measurement system 1 according to Embodiment 1 is described. FIG. 20 is a flow chart showing another measurement processing procedure in the measurement system 1 according to Embodiment 1. Typically, each step shown in FIG. 20 is achieved by the execution of the three-dimensional measurement program 2062 (see FIG. 2) by the processor 202 of the image processing controller 60.

In FIG. 20, an example is shown in which firstly the measurement head 10-1 is used to perform the three-dimensional measurement of the object, and when the measurement result of the three-dimensional measurement is not sufficient, the measurement head 10-2 is used, and the measurement head 10-1 and the measurement head 10-2 are linked to perform the three-dimensional measurement.

Before the measurement processing shown in FIG. 20 starts, the measurement head 10-1 and the measurement head 10-2 are prepared. At this time, in the example shown in FIG. 20, shape data of the object is stored in the image processing controller 60.

With reference to FIG. 20, if the image processing controller 60 receives the measurement start command (YES in step S200), the image processing controller 60 sends a command instructing the irradiation start of the measurement light and the image capturing to the measurement head 10-1 (step S202). Then, the image processing controller 60 acquires the image which is captured from the measurement head 10-1 (step S204), performs the three-dimensional measurement processing to the acquired image, and calculates the measurement result (step S206). Then, the image processing controller 60 determines whether or not the calculated measurement result of the three-dimensional measurement matches the previously stored shape data of any object (step S208). If the calculated measurement result of the three-dimensional measurement matches the previously stored shape data of any object (YES in step S208), the image processing controller 60 outputs the measurement result calculated in step S206 as a final result (step S210). That is, it is indicated that when the calculated measurement result of the three-dimensional measurement matches the previously stored shape data of any object, the three-dimensional measurement can be appropriately performed on the object by a single measurement head 10. Then, the measurement processing of this time ends.

On the other hand, if the calculated measurement result of the three-dimensional measurement does not match the previously stored shape data of any object (NO in step S208), the image processing controller 60 sends a command instructing the irradiation start of the measurement light and the image capturing to the measurement head 10-2 (step S212). Then, the image processing controller 60 acquires the image which is captured from the measurement head 10-2 (step S214), performs the three-dimensional measurement processing on the acquired image, and calculates the measurement result (step S216). Then, the image processing controller 60 determines whether or not a result, which is obtained by incorporating the measurement result of the three-dimensional measurement calculated in step S216 into the measurement result of the three-dimensional measurement calculated earlier, matches the previously stored shape data of any object (step S218). If the calculated measurement result of the three-dimensional measurement matches the previously stored shape data of any object (YES in step S218), the image processing controller 60 outputs, as a final result, the result which is obtained by incorporating the measurement result of the three-dimensional measurement calculated in step S216 into the measurement result of the three-dimensional measurement calculated earlier (step S220). Then, the measurement processing of this time ends.

On the other hand, if the calculated measurement result of the three-dimensional measurement does not match the previously stored shape data of any object (NO in step S218), the image processing controller 60 sends a command instructing the irradiation start of the measurement light to the measurement head 10-1, and sends a command instructing the image capturing to the measurement head 10-2 (step S222). Then, the image processing controller 60 acquires the image which is captured from the measurement head 10-2 (step S224), performs the three-dimensional measurement processing on the acquired image, and calculates the measurement result (step S226). Then, the image processing controller 60 determines whether or not a result, which is obtained by incorporating the measurement result of the three-dimensional measurement calculated in step S226 into the measurement result of the three-dimensional measurement calculated earlier, matches the previously stored shape data of any object (step S228). If the calculated measurement result of the three-dimensional measurement matches the previously stored shape data of any object (YES in step S228), the image processing controller 60 outputs, as a final result, the result which is obtained by incorporating the measurement result of the three-dimensional measurement calculated in step S226 into the measurement result of the three-dimensional measurement calculated earlier (step S230). Then, the measurement processing of this time ends.

On the other hand, if the calculated measurement result of the three-dimensional measurement does not match the previously stored shape data of any object (NO in step S228), the image processing controller 60 sends a command instructing the irradiation start of the measurement light to the measurement head 10-2, and sends a command instructing the image capturing to the measurement head 10-1 (step S232). Then, the image processing controller 60 acquires the image which is captured from the measurement head 10-1 (step S234), performs the three-dimensional measurement processing to the acquired image, and calculates the measurement result (step S236). Then, the image processing controller 60 determines whether or not a result, which is obtained by incorporating the measurement result of the three-dimensional measurement calculated in step S236 into the measurement result of the three-dimensional measurement calculated earlier, matches the previously stored shape data of any object (step S238). If the calculated measurement result of the three-dimensional measurement matches the previously stored shape data of any object (YES in step S238), the image processing controller 60 outputs, as a final result, the result which is obtained by incorporating the measurement result of the three-dimensional measurement calculated in step S236 into the measurement result of the three-dimensional measurement calculated earlier (step S240). Then, the measurement processing of this time ends.

Finally, if the calculated measurement result of the three-dimensional measurement does not match the previously stored shape data of any object (NO in step S238), the image processing controller 60 outputs a failure of the three-dimensional measurement as a final result (step S242). Then, the measurement processing of this time ends.

The measurement processing shown in FIG. 20 is repeatedly performed as necessary. For example, as shown in FIG. 9, when a plurality of the work pieces W randomly stacked in a predetermined position is measured, because a plurality of work pieces of the same type exists, the measurement processing shown in FIG. 20 may be repeatedly performed until the number of the measured work pieces W for each type meets a predetermined condition. In this case, the image processing controller 60 also manages numerical data or the like for each type of the measured work pieces W.

### <F. Embodiment 2>

As another example of the structured illumination, a configuration example using the phase shifting method is described. In comparison with an irradiated dark and light pattern whose brightness changes in two dimensions in the space code method described above, an irradiated dark and light pattern in the phase shifting method has brightness changing in one dimension. That is, a cross section of the measurement light has the two-dimensional dark and light pattern whose brightness changes in one direction and is the same in the other direction.

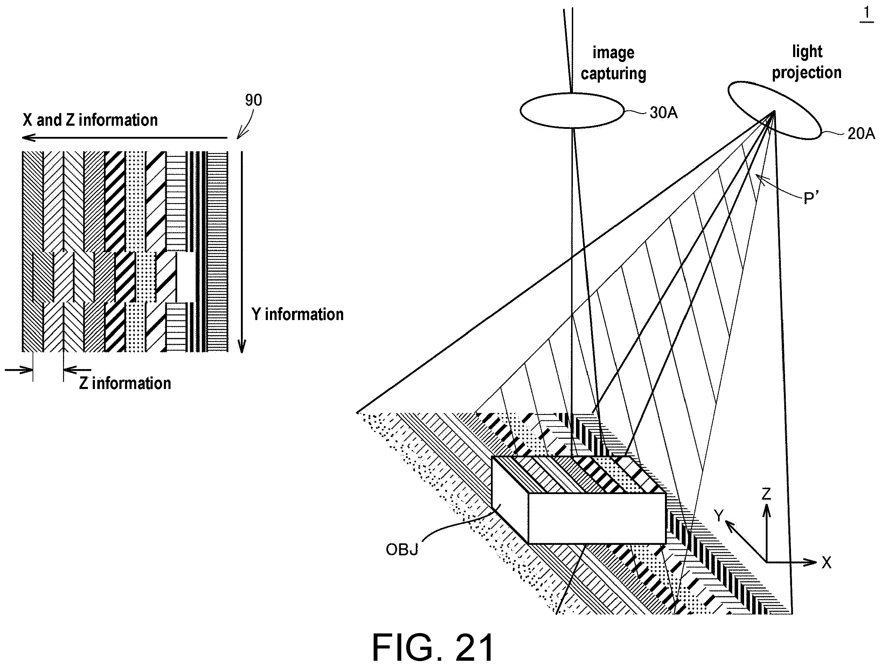

FIG. 21 is a diagram for illustrating the phase shifting method used in a measurement system 1 according to Embodiment 2. With reference to FIG. 21, measurement light P' including a dark and light pattern is irradiated from a projection portion 20A to an object OBJ, and a state in which the measurement light P' is projected to the object OBJ is imaged by an imaging portion 30A. The dark and light pattern shown in FIG. 21 has a same gradation value in the Y direction and changing gradation values in the X direction.

An image 90 which is captured by the imaging portion 30A can generate height information (Z direction) of the object OBJ in the X direction. In the image 90 shown in FIG. 21, an area equivalent to an irradiation surface of the object OBJ shifts in the X direction, and a shift amount in the image shows the height information (displacement in the Z direction) of the object OBJ.

The measurement system 1 according to Embodiment 2 has a plurality of measurement heads including the projection portion 20A and the imaging portion 30A shown in FIG. 21. As described in Embodiment 1, in a state in which the measurement light is irradiated from the projection portion 20A of one measurement head, image capturing is performed by the imaging portion 30A of the measurement head and/or an imaging portion 30A of a measurement head. For example, when there are two measurement heads having the projection portion 20A and the imaging portion 30A, at most four types of images can be acquired, and the expansion of the measurement range and/or the improvement of the measurement precision are/is achieved using these four types of images.

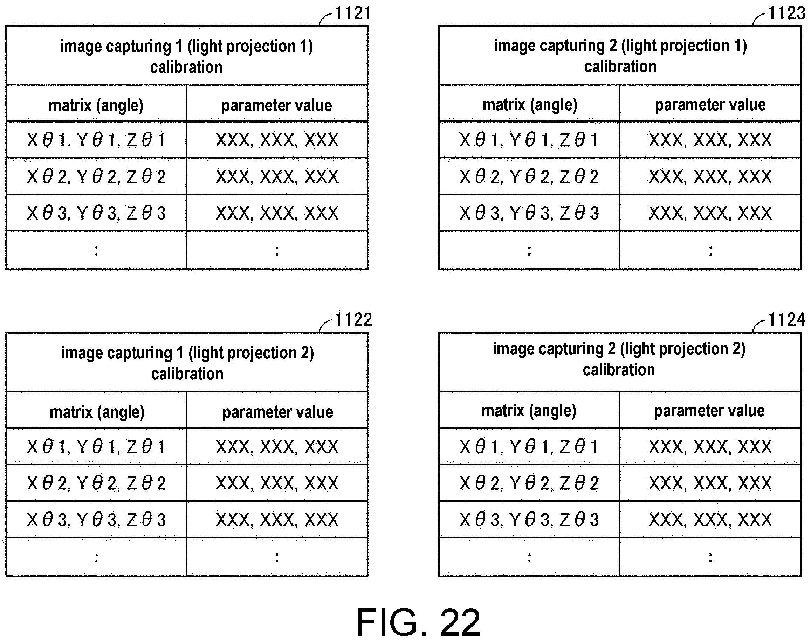

FIG. 22 is a diagram for illustrating calibration parameters used in the measurement system 1 according to Embodiment 2. With reference to FIG. 22, as the calibration parameters used in the measurement system 1 according to Embodiment 2, relative angles with respect to the projection portion 20A of the first measurement head and the projection portion 20A of the second measurement head are shared in the image processing controller 60 respectively associated with the imaging portion 30A of the first measurement head and the imaging portion 30A of the second measurement head.

Other configurations and processes are the same as Embodiment 1, and thus detailed descriptions are not repeated.

### <G. Embodiment 3>

As another example of the structured illumination, a configuration example or the like using the light cutting method is described. Relative to the irradiated dark and light patterns whose brightness changes in two dimensions in the space code method described above, linear light is irradiated in the light cutting method.

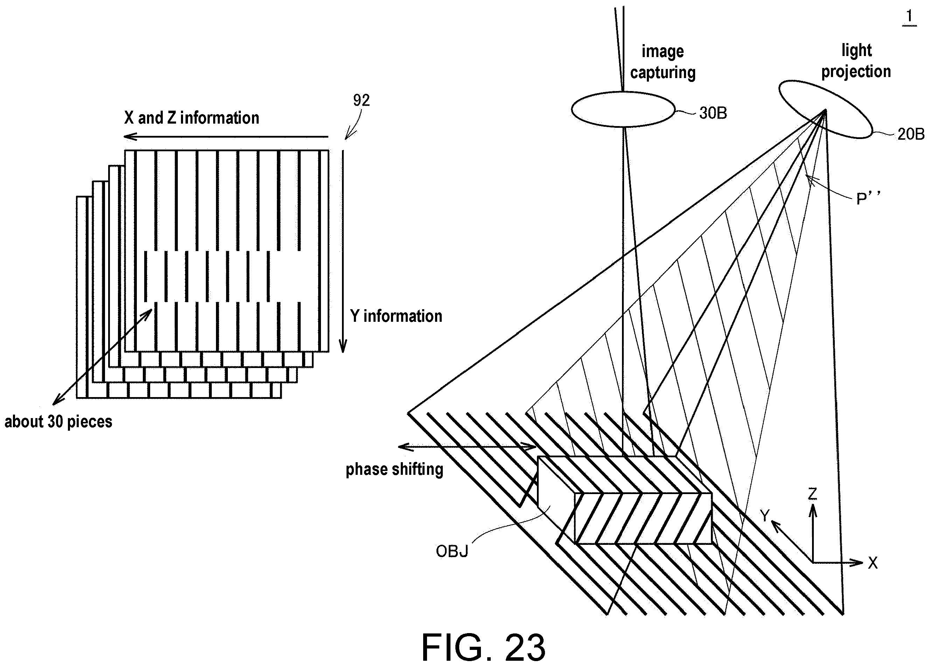

FIG. 23 is a diagram for illustrating the light cutting method used in a measurement system 1 according to Embodiment 3. With reference to FIG. 23, a position in which a projection portion 20B irradiates linear measurement light P" to the object OBJ is sequentially changed (scans), and a state in which the measurement light is projected to the object OBJ is imaged by an imaging portion 30B. Along with the scan of the measurement light P", the imaging portion 30B captures a plurality of images. That is, the projection portion 20 of the measurement head 10 irradiates the linear light as the measurement light and changes an irradiation position in terms of time.

A plurality of images 92 (typically, about 30 pieces) which is captured by the imaging portion 30B can generate height information (Z direction) of the object OBJ in an X direction. In an image 92 shown in FIG. 23, an area equivalent to an irradiation surface of the object OBJ shifts in the X direction, and a shift amount in the image shows the height information (displacement in the Z direction) of the object OBJ.

The measurement system 1 according to Embodiment 3 has a plurality of measurement heads including the projection portion 20B and the imaging portion 30B shown in FIG. 23. As described in Embodiment 1, in a state in which the measurement light is irradiated from the projection portion 20B of one measurement head, image capturing is performed by the imaging portion 30B of the measurement head and/or an imaging portion 30B of a measurement head. For example, when there are two measurement heads having the projection portion 20B and the imaging portion 30B, at most four types of images can be acquired, and the expansion of the measurement range and/or the improvement of the measurement precision are/is achieved using these four types of images.

As calibration parameters used in the measurement system 1 according to Embodiment 3, similar to Embodiment 2, relative angles with respect to the projection portion 20B of the first measurement head and the projection portion 20B of the second measurement head are shared in the image processing controller 60 respectively associated with the imaging portion 30B of the first measurement head and the imaging portion 30B of the second measurement head.

Moreover, the image processing controller 60 previously manages a relationship between a position (angle) in which the projection portion 20B irradiates the measurement light and an image capturing timing of the imaging portion 30B, and performs image synthesis to a captured image group based on the managed correspondence relationship.

Other configurations and processes are the same as Embodiment 1 and Embodiment 2, and thus detailed descriptions are not repeated.

### <H. Variation example>

### (h1: Measurement light)

In the embodiments 1 to 3 described above, the space code method, the phase shifting method, and the light cutting method are illustrated as typical examples of the structured illumination, but the present invention is not limited hereto, and arbitrary structured illumination can be used. Furthermore, without being limited to a category which is referred to as structured illumination, any type of configuration may be used as long as the configuration uses an image which is captured by an arbitrary combination of a projection portion and an imaging portion by using a measurement head (or a configuration similar to the measurement head) having a combination of the projection portion and the imaging portion.

In the embodiments 1 to 3 described above, the configurations are illustrated in which the image processing controller 60 collects and processes images which are captured by the plurality of measurement heads, but the present invention is not limited hereto, and an image processing function may be mounted to any measurement head. Furthermore, the image processing controller 60 may be mounted as a function on a network piece which is referred to as cloud.

### (h2: Synchronization signal)

In the measurement system 1 disclosed in FIG. 2 described above, the configuration is illustrated in which the irradiation of the measurement light and the image capturing are synchronized by exchanging the synchronization signal via the communication line 14 between the measurement head 10-1 and the measurement head 10-2. The present invention is not limited hereto, and another main body may control the irradiation of the measurement light and the timing of the image capturing in the measurement head 10-1 and the measurement head 10-2.

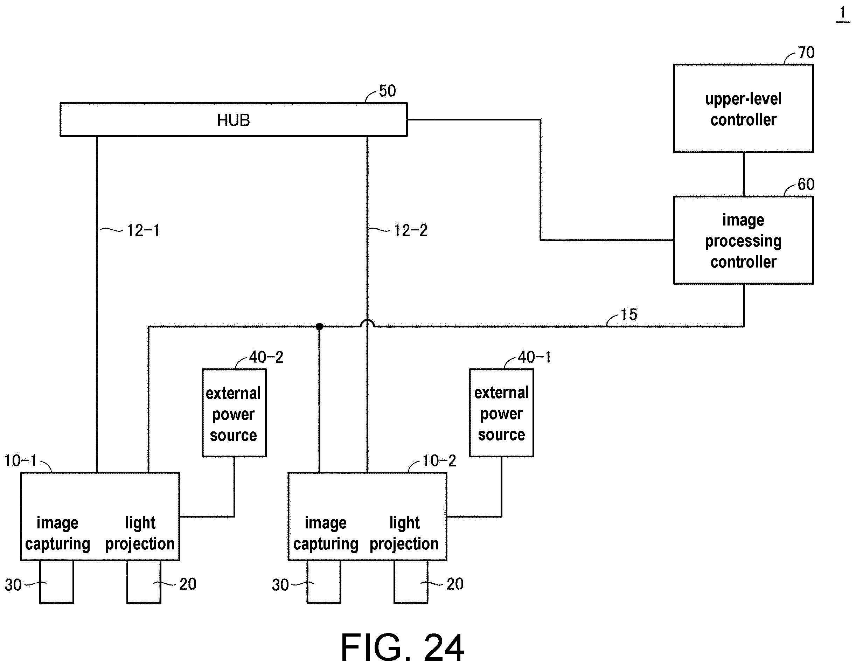

FIG. 24 is a schematic diagram showing another configuration example of the measurement system 1 according to the embodiment. In the measurement system 1 shown in FIG. 24, the image processing controller 60 is communicable with the measurement head 10-2 and the measurement head 10-1 by a communication line 15. In this way, the communication line 15 is arranged which is used for notifying, from the image processing controller 60, the measurement head 10-1 and the measurement head 10-2 of the timing when the measurement light is irradiated from the projection portion 20 of each measurement head 10.

The image processing controller 60 instructs one of the measurement head 10-1 and the measurement head 10-2 to irradiate the measurement light via the communication line 15, and gives an instruction of image capturing to the measurement head 10-1 and/or the measurement head 10-2 in conjunction with the instruction of the irradiation of the measurement light. In this way, in the communication line 15, a command for controlling the irradiation of the measurement light and/or the timing of the image capturing in the measurement head 10-1 and the measurement head 10-2 is transmitted. By using this configuration, the measurement head 10-1 and the measurement head 10-2 are linked, and the expansion of the measurement range and/or the measurement precision can be achieved.

### (h3: Layout of measurement head)

In the embodiments described above, the configuration using two measurement heads 10 is mainly illustrated, but a measurement system using three measurement heads 10 or more may also be configured. In addition, the arrangement of the measurement head 10 can also use arrangement corresponding to application.

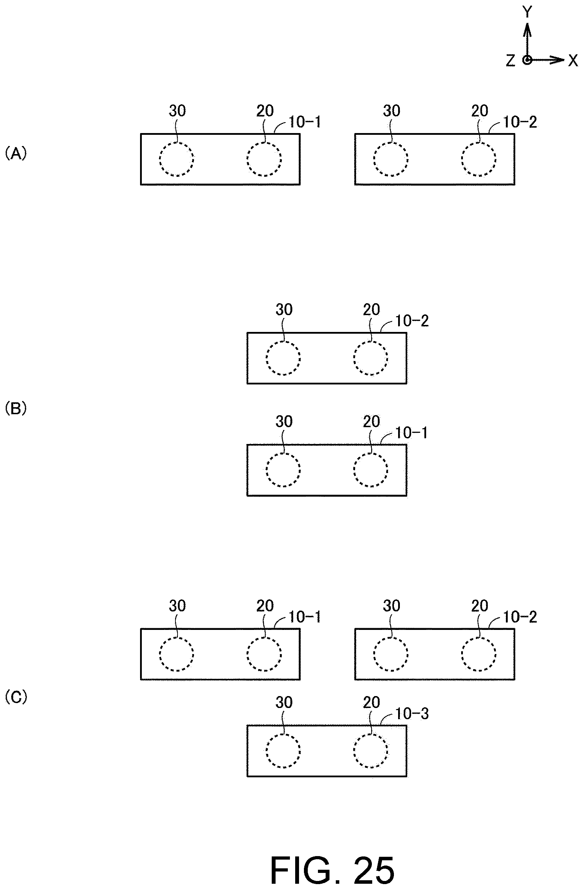

Parts (A) to (C) of FIG. 25 are schematic diagrams showing a layout example of the measurement head 10 in the measurement system 1 according to the embodiment. In parts (A) and (B) of FIG. 25, configuration examples using two measurement heads 10 are shown.

In parts (A) to (C) of FIG. 25, an arrangement direction of the projection portion 20 and the imaging portion 30 of the measurement head 10 is defined as an X direction, and a direction perpendicular to the X direction is defined as a Y direction. At this time, a Z direction shows an optical axis direction of the projection portion 20 and the imaging portion 30.

In part (A) of FIG. 25, an example is shown in which a measurement head 10-1 and a measurement head 10-2 are disposed along the arrangement direction (X direction) of the projection portion 20 and the imaging portion 30. In part (B) of FIG. 25, an example is shown in which a measurement head 10-1 and a measurement head 10-2 are arrangeed along a direction (the Y direction) perpendicular to the arrangement direction (the X direction) of the projection portion 20 and the imaging portion 30.

Moreover, without being limited to the layout shown in part (A) of FIG. 25 and part (B) of FIG. 25, arbitrary layout according to application can be used.

In part (C) of FIG. 25, a measurement system consisting of a measurement head 10-1, a measurement head 10-2 and a measurement head 10-3 is shown. In part (C) of FIG. 25, an example is shown in which the measurement head 10-1 and the measurement head 10-2 are disposed side by side in the X direction, and the measurement head 10-3 is disposed in a position which is shifted in the Y direction. Without being limited to the layout shown in part (C) of FIG. 25, when three measurement heads 10 or more are used, arbitrary layout corresponding to application can be used.

In any case, end surfaces of the projection portion 20 and the imaging portion 30 of each measurement head 10 preferably align in the Z direction.

### <I. Additions>

The embodiment described above includes the following technical ideas.
[Configuration 1] including:
   an image processing controller (60), and
   a first measurement head (10-1) and a second measurement head (10-2) which are connected to the image processing controller, wherein
   each of the first measurement head and the second measurement head includes a projection portion (20) which irradiates measurement light to an object (W), and an imaging portion (30) which images the object in a state in which the measurement light is projected, and
   the image processing controller outputs a measurement result (66) indicating the three-dimensional shape of the object using a first image (61) and at least one of a second image (62) and a third image (63), wherein
   the first image (61) is obtained in a way that the imaging portion of the first measurement head images the object in a state in which the measurement light (22-1) from the projection portion of the first measurement head is projected to the object,
   the second image (62) is obtained in a way that the imaging portion of the second measurement head images the object in a state in which the measurement light (22-1) from the projection portion of the first measurement head is projected to the object, and the third image (63) is obtained in a way that the imaging portion of the first measurement head images the object in a state in which the measurement light (22-2) from the projection portion of the second measurement head is projected to the object.
[Configuration 2] The measurement system according to configuration 1, wherein the image processing controller extracts an image which is not contained in the first image (81) from the second image (82) in the images showing the object, and combines the extracted image to the first image.
[Configuration 3] The measurement system according to configuration 1, wherein the image processing controller extracts an image which is more suitable for measurement in the images showing a common part of the object contained in the first image (84) and the third image (82).
[Configuration 4] The measurement system according to any one of configurations 1 to 3, wherein the image processing controller outputs the measurement result indicating the three-dimensional shape of the object further using a fourth image which is obtained in a way that the imaging portion (30) of the second measurement head (10-2) images the object in a state in which the measurement light (22-2) from the projection portion (20) of the second measurement head (10-2) is projected to the object.
[Configuration 5] The measurement system according to any one of configurations 1 to 4, wherein between the first measurement head and the second measurement head, a communication line (14) is arranged which is used for notifying the second measurement head of a timing when the measurement light (22-1) is irradiated from the projection portion of the first measurement head.
[Configuration 6] The measurement system according to any one of configurations 1 to 4, wherein a communication line (15) is arranged which is used for notifying, from the image processing controller, the first measurement head and the second measurement head of a timing when the measurement light is irradiated from the projection portion of each measurement head.
[Configuration 7] The measurement system according to any one of configurations 1 to 6, wherein the projection portions of the first measurement head and the second measurement head irradiate the measurement light according to structured illumination.
[Configuration 8] The measurement system according to any one of configurations 1 to 7, wherein a cross section of the measurement light has a predetermined two-dimensional dark and light pattern (P).
[Configuration 9] The measurement system according to any one of configurations 1 to 7, wherein the cross section (P') of the measurement light has the two-dimensional dark and light pattern whose brightness changes in one direction and is the same in the other direction.
[Configuration 10] The measurement system according to any one of configurations 1 to 7, wherein the projection portion irradiates linear light as the measurement light and changes an irradiation position in terms of time.
[Configuration 11] A measurement method, including: a step in which a first measurement head (10-1) and a second measurement head (10-2) are prepared, wherein each of the first measurement head and the second measurement head includes a projection portion (20) which irradiates measurement light to an object (W), and an imaging portion (30) which images the object in a state in which the measurement light is projected;
   steps (S102, S104, and S106) in which the imaging portion of the first measurement head images the object and acquires a first image in a state in which the measurement light from the projection portion of the first measurement head is projected to the object;
   steps (S102, S104, and S106) in which the imaging portion of the second measurement head images the object and acquires a second image in a state in which the measurement light from the projection portion of the first measurement head is projected to the object; steps (S110, S108, and S112) in which the imaging portion of the first measurement head images the object and acquires a third image in a state in which the measurement light from the projection portion of the second measurement head is projected to the object; and
   a step (S 114) in which a measurement result indicating the three-dimensional shape of the object is output using the first image and at least one of the second image and the third image.

### <J. Advantage>

The measurement system 1 according to the embodiment uses a plurality of measurement heads including the projection portion which irradiates the measurement light to the object, and the imaging portion which images the object in a state in which the measurement light is projected, and thereby easily achieves the expansion of the measurement range and/or the improvement of the measurement precision.

It should be considered that the embodiment disclosed here is illustrative in all respects and is not limitative. The scope of the present invention is shown by claims instead of the above descriptions and is intended to include meanings equal to the claims and all changes within the scope.

### [Reference Signs List]

- 1: measurement system
- 10, 10-1, 10-2: measurement head
- 12, 14, 15: communication line
- 20, 20A, 20B: projection portion
- 22, 22-1, 22-2: measurement light
- 30, 30A, 30B: imaging portion
- 32, 32-1, 32-2: reflection light
- 40: external power source
- 44, 86, 87, 88: synthesized image
- 50: hub
- 60: image processing controller
- 61: first image
- 62: second image
- 63: third image
- 64: three-dimensional shape measurement processing
- 66: measurement result
- 70: upper-level controller
- 81, 82, 83, 84, 90, 92: image
- 100: processing portion
- 110: setting portion
- 112, 116: storage portion
- 114, 210: display portion
- 118, 216: upper-level interface portion
- 120: synchronous interface portion
- 202: processor
- 204: main memory
- 206: storage
- 208: input portion
- 212: optical drive
- 215: recording medium
- 214: lower-level interface portion
- 218: processor bus
- 2060: OS
- 2062: three-dimensional measurement program
- OBJ: object
- W: work piece

## Claims

1. A measurement system, comprising:
an image processing controller, and
a first measurement head and a second measurement head which are connected to the image processing controller, wherein
each of the first measurement head and the second measurement head comprises a projection portion which irradiates measurement light to an object, and an imaging portion which images the object in a state in which the measurement light is projected, and
the image processing controller outputs a measurement result indicating a three-dimensional shape of the object using a first image and at least one of a second image and a third image, wherein
the first image is obtained in a way that the imaging portion of the first measurement head images the object in a state in which the measurement light from the projection portion of the first measurement head is projected to the object,
the second image is obtained in a way that the imaging portion of the second measurement head images the object in a state in which the measurement light from the projection portion of the first measurement head is projected to the object, and the third image is obtained in a way that the imaging portion of the first measurement head images the object in a state in which the measurement light from the projection portion of the second measurement head is projected to the object.

2. The measurement system according to claim 1, wherein the image processing controller extracts an image which is not contained in the first image from the second image in the images showing the object, and combines the extracted image to the first image.

3. The measurement system according to claim 1, wherein the image processing controller extracts an image which is more suitable for measurement in the images showing a common part of the object contained in the first image and the third image.

4. The measurement system according to any one of claims 1 to 3, wherein the image processing controller outputs the measurement result indicating the three-dimensional shape of the object further using a fourth image which is obtained in a way that the imaging portion of the second measurement head images the object in a state in which the measurement light from the projection portion of the second measurement head is projected to the object.

5. The measurement system according to any one of claims 1 to 4, wherein between the first measurement head and the second measurement head, a communication line is arranged which is used for notifying the second measurement head of a timing when the measurement light is irradiated from the projection portion of the first measurement head.

6. The measurement system according to any one of claims 1 to 4, wherein a communication line is arranged which is used for notifying, from the image processing controller, the first measurement head and the second measurement head of a timing when the measurement light is irradiated from the projection portion of each measurement head.

7. The measurement system according to any one of claims 1 to 6, wherein the projection portions of the first measurement head and the second measurement head irradiate the measurement light according to structured illumination.

8. The measurement system according to any one of claims 1 to 7, wherein a cross section of the measurement light has a predetermined two-dimensional dark and light pattern.

9. The measurement system according to any one of claims 1 to 7, wherein a cross section of the measurement light has a two-dimensional dark and light pattern whose brightness changes in one direction and is the same in the other direction.

10. The measurement system according to any one of claims 1 to 7, wherein the projection portion irradiates linear light as the measurement light and changes an irradiation position in terms of time.

11. A measurement method, comprising: a step in which a first measurement head and a second measurement head are prepared, wherein each of the first measurement head and the second measurement head comprises a projection portion which irradiates measurement light to an object, and an imaging portion which images the object in a state in which the measurement light is projected;
steps in which the imaging portion of the first measurement head images the object and acquires a first image in a state in which the measurement light from the projection portion of the first measurement head is projected to the object;
steps in which the imaging portion of the second measurement head images the object and acquires a second image in a state in which the measurement light from the projection portion of the first measurement head is projected to the object;
steps in which the imaging portion of the first measurement head images the object and acquires a third image in a state in which the measurement light from the projection portion of the second measurement head is projected to the object; and
a step in which a measurement result indicating a three-dimensional shape of the object is output using the first image, and at least one of the second image and the third image.
